# EUROPEAN PATENT APPLICATION

(11) **EP 2 400 071 A1**
(43) Date of publication of application: **28.12.2011**
(21) Application number: 10167294.7
(22) Date of filing: 25.06.2010
(51) Int. Cl.: E03F 1/00, B61D 35/00, B63B 29/14, B64D 11/02

(54) **Vacuum toilet system**

(71) Applicant: Tecnicas Modulares E Industriales, S.A., 08400 Granollers (ES)
(72) Inventor: Perez Lama, Ramiro, 08403 Granollers (ES)
(74) Representative: Ponti Sales, Adelaida

(57) **Abstract**

The toilet with vacuum evacuation system comprises a bowl (1), a deposit (2) for receiving sewage, a cutting valve (3) placed between the bowl exit and the inlet of the deposit (2) and an air ejector (10) connected to the deposit (2), and it is characterized in that said cutting valve (3) is a spherical valve provided with a joint system based on polytetrafluorethylene charged with graphite, glass fiber and/or steel powder.

## Description

The present invention refers to a toilet with a vacuum evacuation system, to be used preferably in vehicles, such as e.g. trains.

### BACKGROUND OF THE INVENTION

In the last decades, different toilet systems with vacuum evacuation have been developed, to prevent the dumping of residues outside, e.g. in the case of trains to the track.

Another advantage of the toilet systems with vacuum evacuation is the reduction of water used to clean the bowl and the dragging of the residues to a deposit, if it exists, in comparison with the water needed in the gravity toilets.

This reduction of the quantity of water needed for each use is specially important in the vehicles, because it permits to reduce the size of the water tank placed in the vehicle to feed the cleaning system of the bowl and, consequently, also to reduce its weight.

The holder of the present application has developed some toilet systems with vacuum evacuation, such as those described in the Spanish Utility Model U200001568 and Spanish patent P9201120.

However, these toilet systems with vacuum evacuation present the drawback that their maintenance costs are high.

The component presenting more breakdowns and maintenance problems is the cutting valve that closes the passage between the bowl and the residues deposit due to the blockages produced by the dirt and, mainly, by objects thrown to the bowl by the passengers, such as cloths, syringes, pens, etc.

Therefore, it is apparent the need to provide a toilet with a vacuum evacuation system with an enhanced efficiency and reliability, reducing the material immobilization periods and the exploitation costs of the train companies.

### SUMMARY OF THE INVENTION

With the toilet and the system of the invention said drawbacks can be solved, presenting other advantages that will be described.

The toilet with vacuum evacuation system of the present invention comprises a bowl, a deposit for receiving residual water, a cutting valve between the bowl exit and the inlet of the deposit, and an air ejector connected to the deposit, and it is characterized in that said cutting valve is a sphere valve provided with a joint system base of polytetrafluorethylene charged with graphite, glass fiber and steel powder.

Thanks to this feature, the joint system of the cutting valve is insensitive to the wear that the presence of objects in the bowl could produce, e.g. syringes, cloths, papers, etc. Hence, the cost of maintenance of the cutting valve is reduced in comparison with the currently used cutting valves.

Advantageously, said bowl has a frustoconical shape at its lower part, to facilitate the construction and the fall of the residues to the bottom of the bowl.

Also advantageously, said bowl is made from a single piece of steel plate, preferably obtained by pressing to reduce the construction cost and enhance the quality of the finishes, because no welding is used.

Preferably, between said deposit and the air ejector is placed an odor filter constituted by a recipient in which a filtering cartridge is housed, said recipient constituting the cylindrical odor filter and the tubular filtering cartridge and it is composed by two adjacent sections with specific absorbing materials of ammoniac and sulfhydric acid.

Advantageously, said odor filter comprises an anti-return valve permitting the passage of gases only in the exit direction.

According to a preferred embodiment, a flexible rubber sheet mounted on a drilled plate forms said anti-return valve.

### BRIEF DESCRIPTION OF THE DRAWINGS

For a better understanding of what has been described, some drawings are attached in which, diagrammatically and only as a non-limitative example, an embodiment is shown.

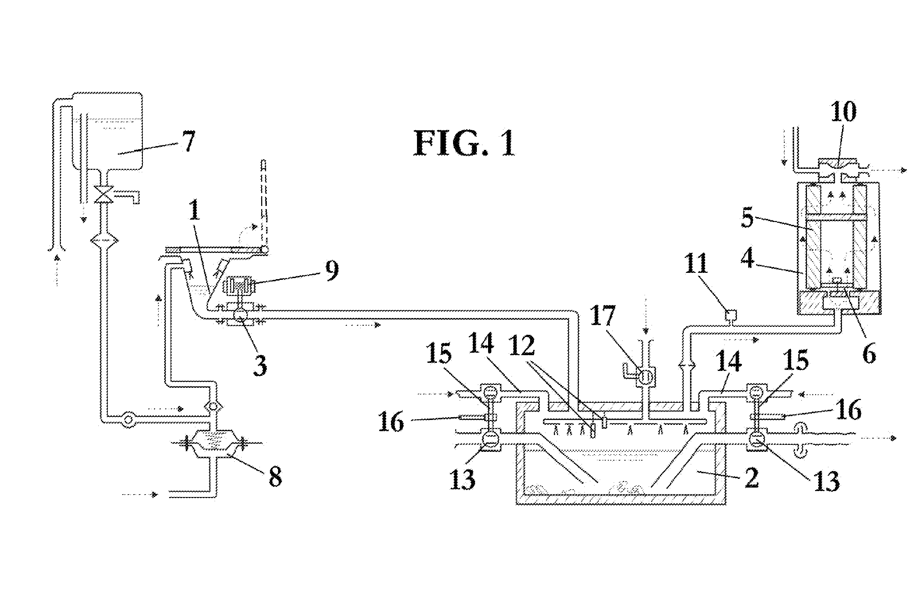

Fig. 1 is a diagrammatical view of the toilet and vacuum evacuation system of the present invention.

### DESCRIPTION OF A PREFERRED EMBODIMENT

As shown in Fig. 1, the toilet with vacuum evacuation system of the present invention comprises a toilet bowl 1 connected to a sewage deposit 2.

Said toilet bowl 1 has a frustoconical shape at its internal part and is formed by a single steel plate obtained by pressing.

Between said toilet bowl 1 and said deposit 2 a cutting valve 3 is placed, which is a spherical valve provided with a joint system based on polytetrafluoroethylene charged with graphite, glass fiber and/or steel powder, to minimize its maintenance.

To said deposit 2 an odor filter 4 is connected, composed from two adjacent sections filled with an absorbent material of selective action on NH₃ and SH₂.

This odor filter 4 comprises an anti-return valve 6, formed by a flexible rubber sheet mounted on a drilled plate to facilitate the passage of gases only in the exit direction.

The toilet of the present invention operates in the following way:
When a user or passenger deposits in the toilet bowl 1 any waste, he/she presses a push-button (not shown) so that a quantity of about 325 cc of water are provided to the bowl 1. This quantity of water comes from a water tank 7 and is provided to the bowl 1 by the action of a dosage pump 8.

When the water arrives to the bowl 1, a pneumatic rotating driver 9 connected to the cutting valve 3 opens it and communicates directly the bowl 1 with the deposit 2, the wastes being pushed by the pressure difference between the bowl 1, which is submitted to atmospheric pressure, and the internal part of the deposit 2, which is at a lower pressure than the atmospheric pressure.

After some time, the cutting valve 1 is driven, closing the communication of the bowl 1 with the deposit 2. The dosage pump 8 adds a quantity of water, estimated in 325 cc, to clean the bowl 1, forming a residual water at the bottom of the bowl 1, preventing the residues from being adhered to the bowl 1 and enhancing the tightness of the cutting valve 3.

The air from leakages that enters in the system under vacuum conditions is extracted by the suction created by an ejector 10 through said odor filter 4. A pressure sensor 11 informs the control system of the process about the vacuum level inside the deposit 2, to activate the ejector 10 and to produce a depression at the upper part of the odor filter 4 to increase the vacuum level until a preset level is achieved. The ejector 10 will remain off until the vacuum level lowers to a preset lower level, in which the ejector 10 is driven again to keep the vacuum level between two preset levels.

The closing action of the anti-return valve 6 prevents the external air to be introduced inside the system when the ejector 10 is off.

The odor filter 4 prevents the stink inside the deposit 2 to exit by the absorbent effect of the filtering cartridge 5 when the ejector 10 is operated.

The deposit 2 comprises level sensors 12 to inform a control station in the case the preset filling levels are achieved.

Furthermore, the deposit 2 comprises to discharging valves 13, placed at each side of the deposit 2, permitting the emptying on the two sides.

The deposit 2 also comprises air pipes 14 to communicate the deposit to outside and remove the vacuum during the emptying operation.

Mechanical axes 15 join the discharge valves 13 with the air pipes 14 to act simultaneously when the communication inside the deposit 2 with the outside is opened or closed under the action of levers 16 to remove the vacuum during the emptying operation.

The deposit 2 also comprises a cleaning system 17 formed by pipes to inject pressure water inside the deposit 2 for cleaning it during the emptying process.

It can be seen that the diagram shown in Fig. 1 includes other elements that, for simplicity reasons, are not described, because they do not are part of the invention and they are evident for a person skilled in the art, because they are used normally in this kind of installations.

Even though reference is made to a specific embodiment of the invention, it is apparent for a person skilled in the art that the described toilet with evacuation system is susceptible of numerous variations and modifications, and that all the details cited can be substituted by other technically equivalent ones, without departing from the scope of protection defined by the attached claims.

## Claims

1. Toilet with vacuum evacuation system, comprising a bowl (1), a deposit (2) for receiving sewage, a cutting valve (3) placed between the bowl exit and the inlet of the deposit (2) and an air ejector (10) connected to the deposit (2), **characterized in that** said cutting valve (3) is a spherical valve provided with a joint system based on polytetrafluorethylene charged with graphite, glass fiber and/or steel powder.

2. Toilet according to claim 1, wherein said bowl (1) has at its lower part a frustoconical shape.

3. Toilet according to claim 1 or 2, wherein said bowl (1) is made from a single piece of steel plate.

4. Toilet according to claim 1, wherein between said deposit (2) and the air ejector (10) an odor filter (4) is placed, which is constituted by a recipient in which a filtering cartridge (5) is housed.

5. Toilet according to claim 4, wherein said recipient that constitutes the odor filter (4) is cylindrical and the filtering cartridge (5) is of tubular shape and it is composed by two adjacent sections with specific absorbing materials of ammoniac and sulfhydric acid.

6. Toilet according to claim 4 or 5, wherein said odor filter (4) comprises an anti-return valve (6) permitting the passage of the gases only in the exit direction.

7. Toilet according to claim 6, wherein said anti-return valve (6) is formed by a flexible rubber sheet mounted on a drilled plate.
